# EUROPEAN PATENT SPECIFICATION

(11) **EP 3 578 342 B1**
(45) Date of publication and mention of the grant of the patent: **18.08.2021**
(21) Application number: 19177945.3
(22) Date of filing: 03.06.2019
(51) Int. Cl.: B29C 64/364, B29C 64/393, B29C 64/153, B22F 10/20, B22F 12/00, B33Y 40/00, B33Y 30/00

(54) **MODELING DEVICE**
MODELLIERUNGSVORRICHTUNG
DISPOSITIF DE MODÉLISATION

(30) Priority: 07.06.2018 JP 2018109575
(43) Date of publication of application: 11.12.2019
(73) Proprietor: Nabtesco Corporation, Tokyo 102-0093 (JP)
(72) Inventor: ISHIYAMA, Shigetoshi, Shimogyo-ku, Kyoto 600-8813 (JP); KATO, Tomotsugu, Shimogyo-ku, Kyoto 600-8813 (JP); TOMIE, Takashi, Yachiyo-shi, Chiba 276-0046 (JP); TSUCHIDA, Kenichi, Yachiyo-shi, Chiba 276-0046 (JP)
(74) Representative: Grünecker Patent- und Rechtsanwälte PartG mbB

(56) References cited:
- EP-A1- 3 318 351
- EP-A1- 3 539 695
- WO-A1-2017/220744
- US-A1- 2016 207 147

## Description

The present invention relates to a modeling device.

As described in Japanese National Phase Laid-Open Patent Publication No. 2011-526222, there is known a modeling device for producing a three-dimensional object by applying a laser to a powdery material. This modeling device applies a laser to layers corresponding to cross-sectional surface regions of a three-dimensional object so as to sequentially solidify the layers, thus producing the three-dimensional object.

In the modeling device configured as above, when a laser is applied to a powdery material, a smoke-like substance (such as dust, haze, vapor, and volatile particles generated by heating or sublimation of the powdery material) referred to as fume is generated from an irradiated part of the powdery material. In a modeling device described in International Publication No. WO 2011/049143, in order to suppress a phenomenon in which fume thus generated ascends to block a laser path, causing a decrease in amount of laser radiation, a gas is passed locally in a chamber so as to prevent the laser path from being blocked. Further, in the modeling device, a filter is provided in a circulation path for absorbing the gas from inside the chamber and supplying the gas into the chamber, and fume contained in the gas is filtered out by said filter so that the gas is recycled.

The modeling device may be provided with an absorber for absorbing oxygen and water vapor contained in a gas. While absorbing oxygen and water vapor contained in the gas, such an absorber releases, at appropriate timing, the oxygen and water vapor thus absorbed into the atmosphere, for example. There is, however, a limit on an absorption ability of the absorber to absorb oxygen and water vapor. Thus, an increase in amount of the gas supplied into the chamber might lead to a situation in which the absorption ability of the absorber reaches the limit before the absorber releases oxygen and water vapor.

EP3539695 A1 discloses an additive manufacturing apparatus comprising a powder transport system comprising a gas circuit for generating a gas flow of inert gas in which the powder is entrained to transport the powder to the dispenser and a gas dryer for drying inert gas in the gas flow circuit, wherein the powder is entrained in the dried inert gas during transport to the powder dispenser. US2016/207147 A1 discloses an additive processing apparatus comprising a gas recirculation loop connected at a first end thereof to an outlet of a building chamber and at a second end thereof to an inlet of the chamber, the gas recirculation loop including at least one purification device configured to remove impurities from a cover gas and to generate a clean cover gas. In view of the foregoing circumstances, one object of the present invention is to provide a modeling device including an absorber for absorbing oxygen and water vapor, the modeling device being capable of suppressing deterioration in absorption ability of the absorber. The present invention provides a modeling device according to the appended claim 1.

A modeling device for solving the above-described problem is a modeling device for producing a three-dimensional object by a repeated process of applying a laser to a powder layer so as to partially solidify the powder layer, the powder layer being made of a powdery material as defined in the appended claim 1. The modeling device includes a discharge port for discharging into a chamber a gas for removing fume, a suction port for sucking the gas from the chamber, an absorber configured to absorb at least one of oxygen and water vapor from the gas, a first circulation path and a second circulation path each communicating between the discharge port and the suction port so that the gas is circulated from the suction port to the discharge port, the absorber being provided on the first circulation path and not provided on the second circulation path, and a bypass passage connecting between an upstream side and a downstream side of the absorber in the first circulation path.

According to the above-described configuration, the bypass passage is provided in the first circulation path, and thus it is possible to reduce a flow rate of the gas passing through the absorber so as to prevent an absorption ability of the absorber from reaching a limit. The second circulation path is further provided in combination therewith, and thus it is possible to further reduce a flow rate of the gas passing through the absorber. Consequently, it is possible to suppress deterioration in absorption ability of the absorber.

The above-described modeling device further includes a switching portion for switching between a first state and a second state, the first state being a state where the first circulation path communicates with the absorber, so that the gas circulates from the suction port through the absorber to the discharge port, the second state being a state where communication between the first circulation path and the second circulation path is blocked, so that the gas circulates between the absorber and the bypass passage.

According to the above-described configuration, when a state of the modeling device is switched to the first state by the switching portion, the gas is passed through the absorber so as to be supplied into the chamber. On the other hand, when the state of the modeling device is switched to the second state by the switching portion, while the gas containing at least one of oxygen and water vapor and passing though the absorber is limited so as to prevent the absorption ability of the absorber from reaching a limit, a necessary amount of gas passes through the second circulation path to be supplied into the chamber. Furthermore, upon switching to the second state, the gas can be circulated between the absorber and the bypass passage, and thus the absorber can continue to operate without being stopped from operating. Further, whether the modeling device is in the first state or the second state, the absorber can continue to operate, and thus it is possible to suppress deterioration in absorption ability of the absorber, which is caused by delayed startup of the absorber.

In the above-described modeling device, preferably, the switching portion switches to the second state so that at least one of an oxygen concentration and a water vapor concentration of the gas is in a predetermined range appropriate for modeling of the three-dimensional object.

According to the above-described configuration, when at least one of the oxygen concentration and the water vapor concentration is decreased to below the predetermined range by the absorber, further absorption is no longer needed, and thus switching to the second state is performed so that unnecessary absorption of oxygen and water vapor by the absorber can be suppressed.

Preferably, the above-described modeling device further includes a flow rate adjustment portion for adjusting a flow rate of the gas passing through the first circulation path and a flow rate of the gas passing through the second circulation path.

According to the above-described configuration, since the flow rate adjustment portion is provided, while an amount of the gas passing through the first circulation path is limited so as to prevent the absorption ability of the absorber from reaching a limit, a flow rate of the gas passing through the second circulation path can be adjusted so that a necessary amount of gas is supplied into the chamber. That is, even in the first state, it is possible to suppress a flow rate of the gas passing through the absorber. As a result, while the absorption ability of the absorber is maintained, a necessary amount of gas can be supplied into the chamber.

Preferably, the above-described modeling device further includes a filter for removing fine powder particles from the gas passing therethrough, the filter being provided upstream of the absorber in the first circulation path.

According to the above-described configuration, the gas passes through the filter for removing fine powder particles and then passes through the absorber, and thus it is possible to suppress entry of the fine powder particles into the absorber.

According to the present invention, in a modeling device including an absorber for absorbing oxygen and water vapor, it is possible to suppress deterioration in absorption ability of the absorber.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a view showing a schematic configuration of an embodiment of a modeling device;
Fig. 2 is a block diagram showing an electrical configuration of a modeling device of the embodiment;
Fig. 3(A) is a timing chart showing an operation of the modeling device of the embodiment, specifically illustrating how an oxygen concentration changes;
Fig. 3(B) is a timing chart showing an operation of the modeling device of the embodiment, specifically illustrating an operation of a first switching valve;
Fig. 3(C) is a timing chart showing an operation of the modeling device of the embodiment, specifically illustrating an operation of a second switching valve;
Fig. 3(D) is a timing chart showing an operation of the modeling device of the embodiment, specifically illustrating an operation of an opening/closing valve of an absorber;
Fig. 3(E) is a timing chart showing an operation of the modeling device of the embodiment, specifically illustrating an operation of a third switching valve;
Fig. 4 is a flow chart showing control of the modeling device of the embodiment;
Fig. 5 is a flow chart showing control of the modeling device of the embodiment;
Fig. 6 is a view showing a second state of a circulation path in the modeling device of the embodiment;
Fig. 7 is a view showing a first state of the circulation path of the modeling device of the embodiment;
Fig. 8 a view showing a modification example of an operation of the circulation path in the modeling device;
Fig. 9 is a view showing a modification example of the circulation path in the modeling device;
Fig. 10 is a view showing a modification example of the circulation path in the modeling device; and
Fig. 11 is a view showing a modification example of the circulation path in the modeling device.

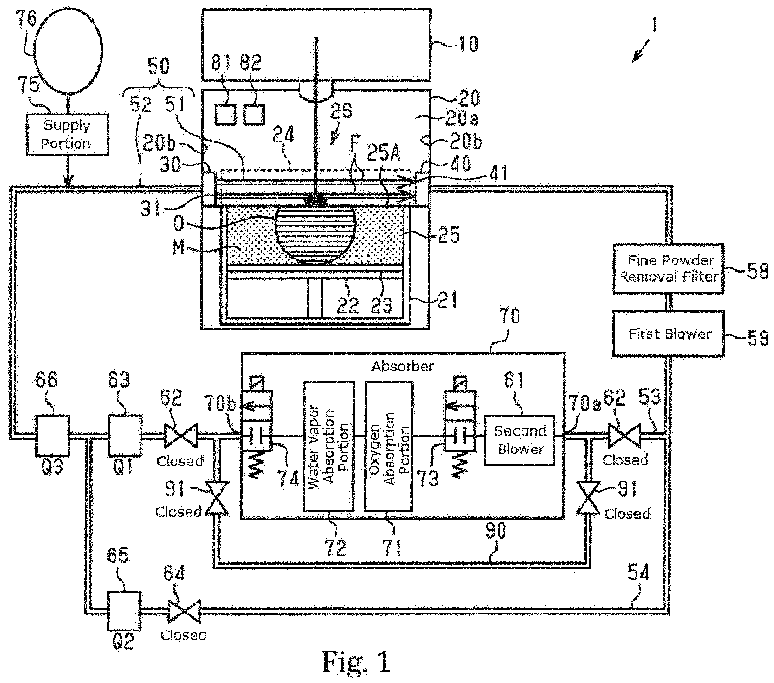

With reference to Fig. 1 to Fig. 7, the following describes an embodiment of a modeling device.

First, a schematic configuration of the modeling device will be described with reference to Fig. 1.

As shown in Fig. 1, a modeling device 1 includes a modeling portion 20 for modeling a three-dimensional object, a fume removal flow forming portion 26 for supplying an inert gas to the modeling portion 20, and an absorber 70 for absorbing oxygen and water vapor from the gas being circulated. An inside (hereinafter, referred to as a "chamber 20a") of the modeling portion 20 is filled with the inert gas. An Ar gas is used as the inert gas. A fume removal flow is a flow for removing fume and includes a so-called laminar flow.

The modeling portion 20 includes a container 21 having a modeling table 22 for supporting a three-dimensional object O modeled, a recoater 24 for stacking, on the modeling table 22, a powder layer 25 made of a powdery material M to a predetermined thickness, and a laser radiation portion 10 for applying a laser beam to the powder layer 25 on the modeling table 22.

The modeling table 22 of the container 21 is movable up and down and is moved down by one layer height upon solidification of a layer of the powder layer 25. A modeling plate 23 serving as a table for placing the three-dimensional object O thereon is installed on an upper surface of the modeling table 22.

Upon solidification of a layer of the powder layer 25, the recoater 24 stacks, on the modeling plate 23, another layer of the powder layer 25 to a thickness of one layer. A surface of the powder layer 25 stacked on the modeling table 22 (the modeling plate 23) near the laser radiation portion 10 is a laser radiation surface 25A for receiving laser radiation.

The laser radiation portion 10 uses a scanning system such as a galvanometer mirror to scan a laser beam emitted from an unshown laser oscillator so as to apply the laser beam to a desired position on the laser radiation surface 25A of the powder layer 25.

The fume removal flow forming portion 26 provides a new supply of inert gas into the chamber 20a and also circulates the inert gas thus supplied into the chamber 20a. The fume removal flow forming portion 26 includes a circulation path 50 for circulating the inert gas in this manner.

The fume removal flow forming portion 26 includes a discharge portion 30 having a plurality of discharge ports 31 for discharging into the chamber 20a the inert gas for removing fume and a suction portion 40 having a plurality of suction ports 41 for sucking the inert gas discharged through the discharge ports 31. By use of the inert gas discharged through the plurality of discharge ports 31, the fume removal flow forming portion 26 forms a fume removal flow F flowing over the powder layer 25 along the laser radiation surface 25A. The fume removal flow F is a flow of the inert gas formed in a layer form over the powder layer 25 along the laser radiation surface 25A.

The circulation path 50 includes a first path 51 extending from the discharge ports 31 to the suction ports 41 via an inner side of the chamber 20a and a second path 52 extending from the suction ports 41 to the discharge ports 31 via an outer side of the chamber 20a. The second path 52 is a circulation path communicating between the suction ports 41 and the discharge ports 31 so that the inert gas is circulated from the suction ports 41 to the discharge ports 31.

Downstream of the suction ports 41 in the second path 52, a fine powder removal filter 58 for removing fine powder particles or the like from the inert gas and a first blower 59 for blowing the inert gas are provided in this order. The fine powder removal filter 58 is configured so that the inert gas is drawn thereinto by the first blower 59. In this manner, before the inert gas is introduced into the absorber 70, fine powder particles or the like contained in the inert gas are removed, and thus it is possible to suppress, for example, the occurrence of clogging in the absorber 70 and thus to reduce a frequency of replacing a filter.

The second path 52 has a circulation path bifurcated into two parts at a point downstream of the first blower 59, the two parts being jointed together at a point upstream of discharge ports 31. The circulation path includes a first circulation path 53 and a second circulation path 54, an absorber 70 being provided on the first circulation path 53 and not provided on the second circulation path 54.

In the first circulation path 53, the absorber 70 is installed. Upstream of the absorber 70, a first switching valve 62 is installed. A second blower 61 is built in the absorber 70. The second blower 61 is intended to pass the inert gas through a water vapor absorption portion 72 and an oxygen absorption portion 71 each having a large pressure loss. As a possible modification example, the second blower 61 may be provided outside the absorber 70. The description herein, however, is directed to an absorber with a built-in blower in general use. Downstream of the absorber 70 in the first circulation path 53, another first switching valve 62 and a first flowmeter 63 are installed in this order. The first switching valves 62 are formed of, for example, a butterfly valve. In response to an external instruction, the first switching valves 62 are capable of changing a flow rate of the inert gas passing through the first circulation path 53 and also of opening and closing the first circulation path 53. The first flowmeter 63 is a flowmeter of, for example, a diaphragm type or an ultrasonic type. The first flowmeter 63 measures a flow rate of the inert gas flowing through the first circulation path 53 and outputs a result of the measurement. A flow rate measured by the first flowmeter 63 is indicated as a "first flow rate Q1."

In the second circulation path 54, the absorber 70 is not provided, and a second switching valve 64 and a second flowmeter 65 are installed in this order from upstream. The second switching valve 64 is formed of, for example, a butterfly valve. In response to an external instruction, the second switching valve 64 is capable of changing a flow rate of the inert gas passing through the second circulation path 54 and also of opening and closing the second circulation path 54. The second flowmeter 65 is a flowmeter of, for example, the diaphragm type or the ultrasonic type. The second flowmeter 65 measures a flow rate of the inert gas flowing through the second circulation path 54 and outputs a result of the measurement. A flow rate measured by the second flowmeter 65 is indicated as a "second flow rate Q2."

A third flowmeter 66 is installed between a joint section where the first circulation path 53 and the second circulation path 54 of the second path 52 are joined together and the discharge ports 31. The third flowmeter 66 is a flowmeter of, for example, a diaphragm type or an ultrasonic type. The third flowmeter 63 measures a flow rate of the inert gas flowing through the second path 52 as a whole and outputs a result of the measurement. A flow rate measured by the third flowmeter 66 is indicated as a "third flow rate Q3."

The first circulation path 53 has a bypass passage 90 bifurcated into two parts at a point downstream of the first switching valve 62 on an upstream side, the two parts being jointed together at a point upstream of the first switching valve 62 on a downstream side. The bypass passage 90 connects between an upstream side and a downstream side of the absorber 70.

A third switching valve 91 is installed in a vicinity of a part of the bypass passage 90 connected to an upstream side of the first circulation path 53. Furthermore, another third switching valve 91 is installed in a vicinity of a part of the bypass passage 90 connected to a downstream side of the first circulation path 53. The third switching valves 91 are formed of, for example, a butterfly valve. In response to an external instruction, the third switching valves 91 are capable of changing a flow rate of the inert gas passing through the bypass passage 90 and also of closing the bypass passage 90.

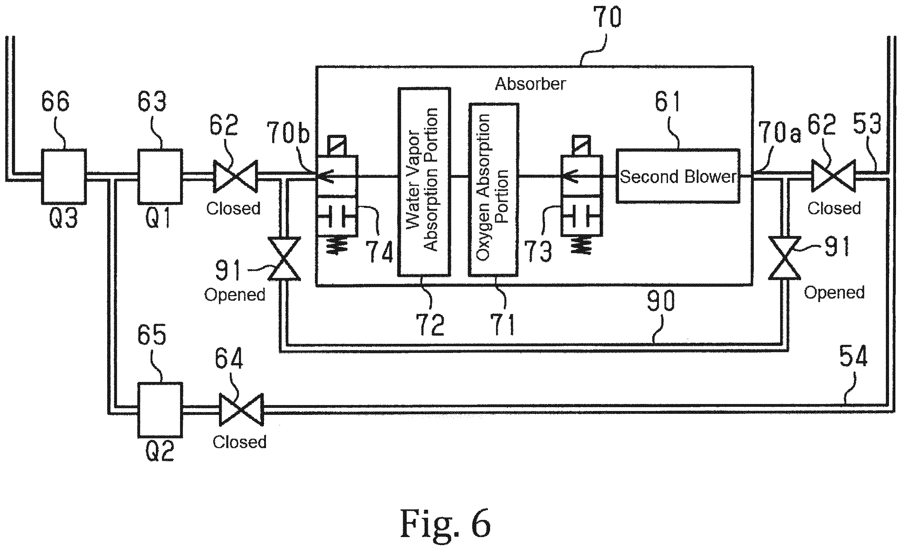

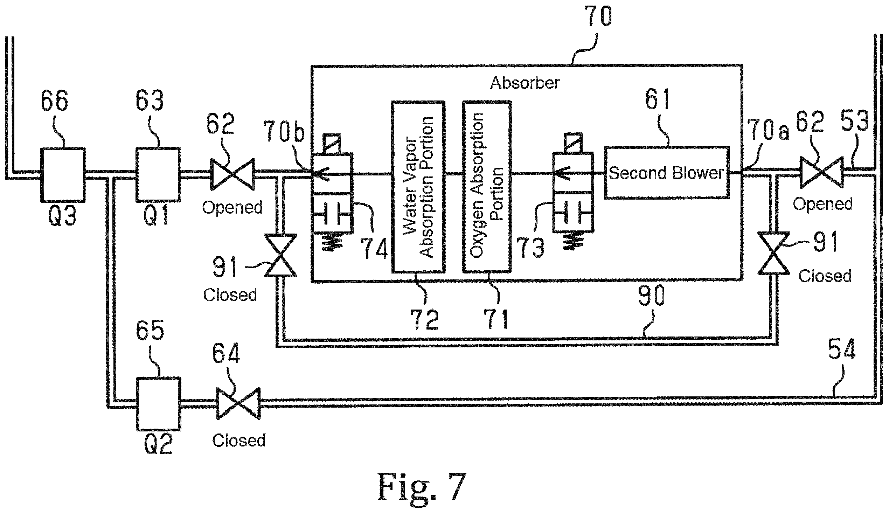

Herein, as shown in Fig. 7, a first state is defined as a state where the first circulation path 53 communicates with the absorber 70, so that the inert gas circulates from the suction ports 41 through the absorber 70 to the discharge ports 31. In this first state, both of the first blower 59 and the second blower 61 operate, and thus the first blower 59 and the second blower 61 can each operate at a reduced load. Further, the first blower 59 and the second blower 61 are equal in flow rate, and a flow rate necessary for a laminar flow can be adjusted by the first switching valves 62. Furthermore, as shown in Fig. 6, a second state is defined as a state where communication between the first circulation path 53 and the absorber 70 is blocked, so that the inert gas circulates between the absorber 70 and the bypass passage 90.

As shown in Fig. 1, the absorber 70 includes the oxygen absorption portion 71 for decreasing a concentration of oxygen contained in the inert gas passing through the first circulation path 53. The oxygen absorption portion 71 has a catalyst for absorbing oxygen. An amount of oxygen absorbed is limited, and upon an absorption level reaching saturation, a recycling process of releasing oxygen absorbed is performed. The oxygen absorption portion 71 may include two systems that are recycled alternately so that the oxygen absorption portion 71 is continuously usable. Furthermore, the absorber 70 includes the water vapor absorption portion 72 for decreasing a concentration of water vapor contained in the inert gas passing through the first circulation path 53. The water vapor absorption portion 72 has a filter containing a hollow fiber membrane for removing water vapor or a filter containing silica gel for absorbing water vapor. The water vapor absorption portion 72 may include two systems that are recycled alternately so that the water vapor absorption portion 72 is continuously usable. While absorbing oxygen and water vapor contained in the inert gas, the absorber 70 releases, at appropriate timing, the oxygen and water vapor thus absorbed into the atmosphere, for example.

The absorber 70 has an inlet 70a for inflow of the inert gas and an outlet 70b for outflow of the inert gas. Furthermore, a first opening/closing valve 73 is installed near the inlet 70a with respect to the oxygen absorption portion 71 and the water vapor absorption portion 72. The first opening/closing valve 73 is a two-position solenoid valve and is configured to be closed normally, i.e., when not energized and opened when energized. A second opening/closing valve 74 is installed near the outlet 70b with respect to the oxygen absorption portion 71 and the water vapor absorption portion 72. The second opening/closing valve 74 is a two-position solenoid valve and is configured to be closed normally, i.e., when not energized and opened when energized. The first opening/closing valve 73 and the second opening/closing valve 74 are provided for the purposes of preventing highly concentrated oxygen and water vapor from flowing into the oxygen absorption portion 71 and the water vapor absorption portion 72, respectively, and opening only when the inert gas is fed to the first circulation path 53.

Upstream of the discharge ports 31 in the second path 52, a supply portion 75 for supplying a new supply of inert gas is provided. While the modeling device 1 is in operation, the supply portion 75 introduces a given amount of inert gas as a new supply of inert gas from a tank 76 into the second path 52.

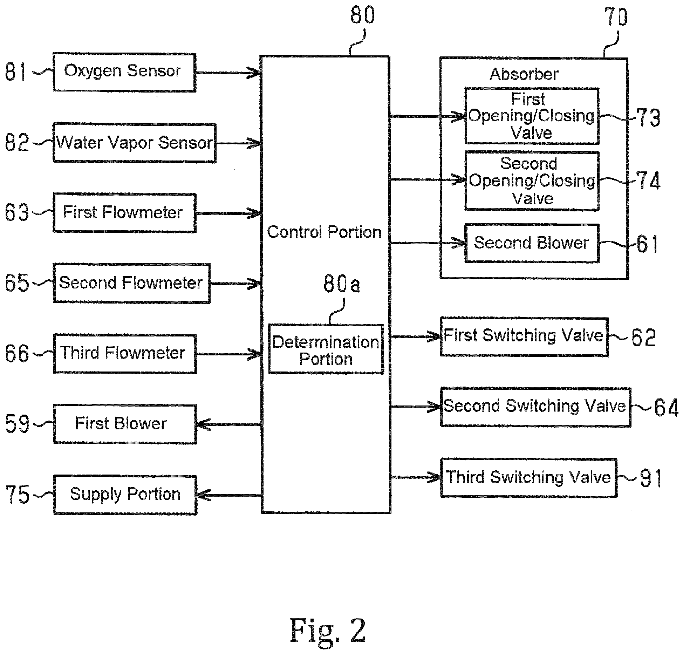

Next, an electrical configuration of the modeling device 1 will be described with reference to Fig. 2.

As shown in Fig. 2, the modeling device 1 includes a control portion 80 for controlling the modeling device 1. In order to model the three-dimensional object O, the control portion 80 controls the container 21, the recoater 24, and the laser radiation portion 10 and also performs control so that an inert gas is circulated in the chamber 20a. In Fig. 2, a configuration related to modeling of the three-dimensional object O itself is omitted. The control portion 80, the first switching valves 62, and the third switching valves 91 function as a switching portion for switching a flow path of the inert gas. The control portion 80, the first switching valves 62, and the second switching valve 64 function as a flow rate adjustment portion.

The control portion 80 controls the supply portion 75 to supply the inert gas to the circulation path 50 and drives the first blower 59 to circulate the inert gas. The control portion 80 controls driving of the absorber 70. That is, the control portion 80 controls the second blower 61, the first opening/closing valve 73, and the second opening/closing valve 74.

An oxygen sensor 81 and a water vapor sensor 82 are provided in the chamber 20a. The oxygen sensor 81 measures an oxygen concentration in the chamber 20a and outputs a measurement result to the control portion 80. The water vapor sensor 82 measures a water vapor concentration in the chamber 20a and outputs a measurement result to the control portion 80. Furthermore, the first flowmeter 63, the second flowmeter 65, and the third flowmeter 66 each measure a flow rate and output a measurement result to the control portion 80.

The control portion 80 controls a degree of opening of the first switching valves 62 in the first circulation path 53 so as to adjust a flow rate of the inert gas passing through the first circulation path 53. The control portion 80 controls a degree of opening of the second switching valve 64 in the second circulation path 54 so as to adjust a flow rate of the inert gas passing through the second circulation path 54. Furthermore, the control portion 80 controls the first opening/closing valve 73 and the second opening/closing valve 74 provided in the absorber 70 to switch between opened/closed states. The first opening/closing valve 73 and the second opening/closing valve 74 open and close in the same manner so as to suppress unwanted entry of the inert gas into the absorber 70. Consequently, the control portion 80 controls the first switching valves 62 and the second switching valve 64 so as to control circulation of the inert gas in the circulation path 50.

Furthermore, the control portion 80 controls the third switching valves 91. When having opened the first switching valves 62, the control portion 80 closes the third switching valves 91 to block the bypass passage 90. That is, the control portion 80 opens the first switching valves 62 and also closes the third switching valves 91, thus creating the first state where the inert gas circulates from the suction ports 41 through the absorber 70 to the discharge ports 31.

Furthermore, when having closed the first switching valves 62, the control portion 80 opens the third switching valves 91 to form a circulation path including the absorber 70. That is, the control portion 80 closes the first switching valves 62 to block communication between the first circulation path 53 and the absorber 70 and opens the third switching valves 91, thus creating the second state where the inert gas circulates in the bypass passage 90.

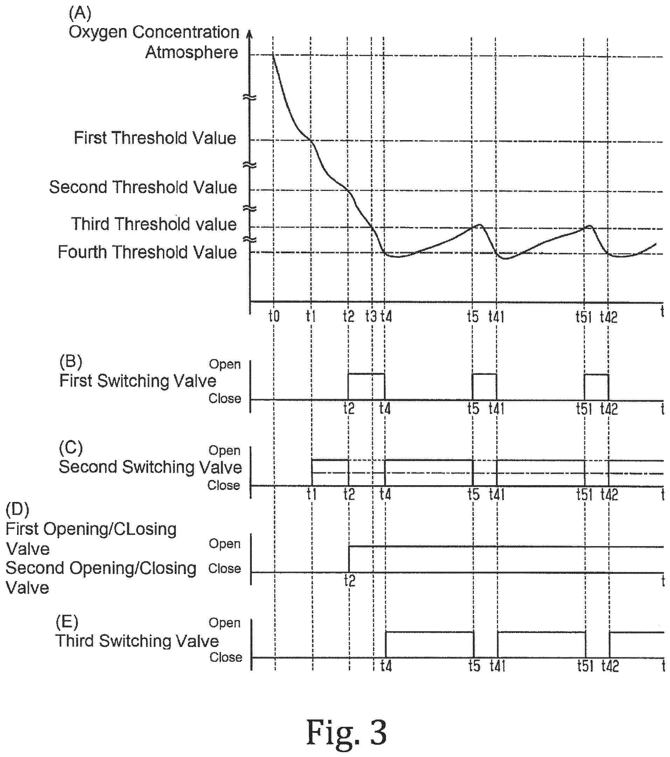

The control portion 80 includes a determination portion 80a for determining that the chamber 20a is filled with the inert gas after startup of the modeling device 1. Immediately after startup of the modeling device 1 (a stage of preparing for modeling), an oxygen concentration and a water vapor concentration in the chamber 20a are high, and thus an absorption amount of the absorber 70 might reach an upper limit. To avoid this, based on whether or not an oxygen concentration in the chamber 20a has become equal to or less than a predetermined value, the determination portion 80a determines whether or not the chamber 20a is filled with the inert gas. That is, as shown in Fig. 3(A), when the oxygen concentration has become equal to or less than a third threshold value as a predetermined range, the determination portion 80a determines that the chamber 20a is filled with the inert gas. The third threshold value is, for example, 100 ppm.

Here, oxygen concentration-based control by the control portion 80 will be described with reference to Figs. 3(A) to 3(E).

As shown in Fig. 3(A), the determination portion 80a have preset a first threshold value, a second threshold value, the third threshold value, and a fourth threshold value of the oxygen concentration. The first threshold value is, for example, 2,000 ppm, the second threshold value is, for example, 1,000 ppm, and the fourth threshold value is, for example, 50 ppm.

At a timing t0 on startup of the modeling device 1, an oxygen concentration in the chamber 20a is almost equal to that in the atmosphere. Thus, the modeling device 1 supplies an inert gas from the supply portion 75 so as to decrease the oxygen concentration. Furthermore, when the oxygen concentration is equal to or more than the first threshold value, the oxygen concentration in the chamber 20a is too high to be appropriate for molding of the three-dimensional object O. At a timing t1 when the oxygen concentration is decreased to less than the first threshold value by supplying the inert gas, the control portion 80 drives the first blower 59 to circulate the inert gas in the circulation path.

As shown in Figs. 3(B) to 3(E), in a state where the oxygen concentration is equal to or more than the first threshold value, the inert gas is fed into the chamber 20a to expel air, and it is awaited that the oxygen concentration is decreased to the first threshold value. Upon the oxygen concentration reaching the first threshold value, while maintaining a state where the first switching valves 62 are closed so that the inert gas does not pass through the first circulation path 53, the control portion 80 opens the second switching valve 64 so that the inert gas passes only through the second circulation path 54. At this time, the control portion 80 operates the first blower 59. Furthermore, the control portion 80 has closed the first opening/closing valve 73 and the second opening/closing valve 74 in the absorber 70.

As shown in Fig. 3(A), when the oxygen concentration is equal to or more than the second threshold value, the oxygen concentration in the chamber 20a is relatively high, and thus breakthrough is highly likely to occur, which refers to a state where an absorption amount of the absorber 70 has reached an upper limit value.

As shown in Figs. 3(B) to 3(E), when the oxygen concentration is equal to or more than the second threshold value, similarly to the case where the oxygen concentration is equal to or more than the first threshold value, the control portion 80 closes the first switching valves 62 and opens the second switching valve 64 so that the inert gas does not pass through the first circulation path 53 and passes only through the second circulation path 54. Furthermore, the control portion 80 opens the third switching valves 91 to bring about the second state where the inert gas circulates in the absorber 70 and the bypass passage 90.

On the other hand, at a timing t2 when the oxygen concentration is decreased to less than the second threshold value, the control portion 80 opens the first switching valves 62 to bring about the first state where the inert gas passes through the first circulation path 53. Furthermore, the control portion 80 closes the third switching valves 91 so that the inert gas does not pass through the bypass passage 90. Moreover, at this time, the control portion 80 opens the first opening/closing valve 73 and the second opening/closing valve 74 in the absorber 70 and operates the second blower 61, and thus the inert gas passes through the absorber 70 so that oxygen and water vapor contained therein are reduced.

When the oxygen concentration is less than the second threshold value, and the inert gas is passed through the absorber 70, the inert gas is controlled to be passed not only through the first circulation path 53 but also through the second circulation path 54 so that there occurs no variation in flow rate (Q3) of the fume removal flow F.

As shown in Fig. 3(A), the inert gas is passed through the absorber 70, starting from the timing t2 when the oxygen concentration is decreased to less than the second threshold value, and thus the oxygen concentration is decreased to less than the third threshold value. At a timing t3 when the oxygen concentration is decreased to less than the third threshold value, the oxygen concentration in the chamber 20a is low, thus satisfying a modeling start condition.

As shown in Figs. 3(B) to 3(E), when the oxygen concentration is less than the third threshold value, similarly to the case where the oxygen concentration is less than the second threshold value, the control portion 80 opens the first switching valves 62 to bring about the first state where the inert gas passes through the first circulation path 53. Furthermore, at this time, the control portion 80 opens the first opening/closing valve 73 and the second opening/closing valve 74 in the absorber 70, and thus the inert gas passes through the absorber 70 so that oxygen and water vapor contained therein are reduced.

In a case where, as a condition for modeling the three-dimensional object O, the oxygen concentration is controlled to be in a predetermined range, the control portion 80 switches between the first state and the second state so as to control the oxygen concentration to be in the predetermined range. At this time, when the first switching valves 62 are closed, while in a conventional example, the absorber 70 and the second blower 61 are stopped from operating, since the bypass passage 90 is provided, and the third switching valves 91 are opened so that the inert gas circulates in the absorber 70 and the bypass passage 90, the absorber 70 and the second blower 61 continue to operate. With this configuration, it is possible to suppress temporary degradation in ability to decrease the oxygen concentration, which is caused by delayed startup of the absorber 70 and the second blower 61. Furthermore, no startup and stopping of the second blower 61 are performed, and thus it is possible to suppress a decrease in life of the second blower 61 and to suppress an influence of a delay in time from startup of the second blower 61 to a time when a volume of air supplied by the second blower 61 becomes stable.

That is, as shown in Fig. 3(A), the inert gas is further passed through the absorber 70, and thus the oxygen concentration is decreased to less than the fourth threshold value. When the oxygen concentration is less than the fourth threshold value, the oxygen concentration in the chamber 20a is sufficiently low. Thus, the control portion 80 controls the oxygen concentration to be in a predetermined range of values equal to or more than the fourth threshold value and less than the third threshold value.

As shown in Figs. 3(B) to 3(E), at timings t4, t41, t42, ... when the oxygen concentration is decreased to less than the fourth threshold value, the control portion 80 closes the first switching valves 62 and opens the second switching valve 64 so that the inert gas does not pass through the first circulation path 53 and passes only through the second circulation path 54. Furthermore, the control portion 80 opens the third switching valves 91 to bring about the second state where the inert gas circulates in the absorber 70 and the bypass passage 90.

Further, as shown in Fig. 3(A), since the inert gas does not pass through the absorber 70, the oxygen concentration is increased to equal to or more than the third threshold value. When the oxygen concentration is equal to or more than the third threshold value, the oxygen concentration in the chamber 20a is no longer in the predetermined range.

As shown in Figs. 3(B) to 3(E), at timings t5, t51, ... when the oxygen concentration is increased to equal to or more than the third threshold value, the control portion 80 opens the first switching valves 62 to bring about the first state where the inert gas passes through the first circulation path 53. Furthermore, at this time, the control portion 80 maintains the first opening/closing valve 73 and the second opening/closing valve 74 in the absorber 70 in an opened state, and thus the inert gas passes through the absorber 70 so that oxygen and water vapor contained therein are reduced.

Thereafter, the control portion 80 continues to perform the above-described control so that the oxygen concentration in the chamber 20a is in the predetermined range of values equal to or more than the fourth threshold value and less than the third threshold value.

Upon ending of modeling of the three-dimensional object O, the control portion 80 stops operating the second blower 61 and closes the first opening/closing valve 73 and the second opening/closing valve 74 so as to close the inlet 70a and the outlet 70b of the absorber 70, thus preventing entry of the inert gas into the absorber 70. Furthermore, at this time, the control portion 80 closes the first switching valves 62 so that the inert gas does not pass through the first circulation path 53.

Next, an operation of the modeling device 1 configured as above will be described with reference to Fig. 1 to Fig. 7. As shown in Fig. 1, in the modeling device 1 before startup, the first switching valves 62 are closed, the second switching valve 64 is closed, the first opening/closing valve 73 and the second opening/closing valve 74 are closed, and the third switching valves 91 are closed.

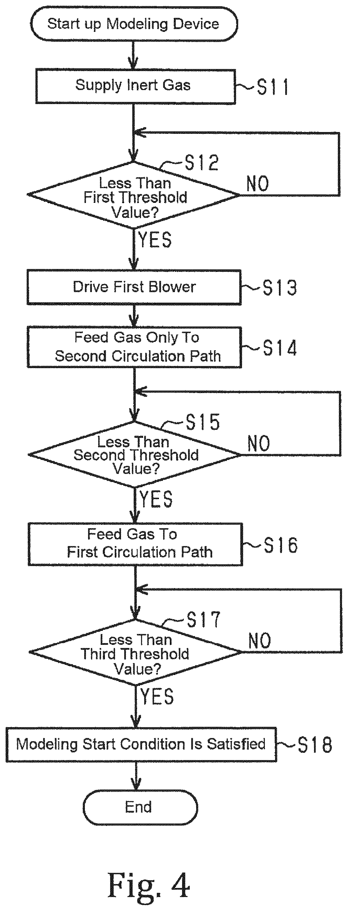

First, as shown in Fig. 4, upon startup of the modeling device 1, the control portion 80 supplies an inert gas so as to fill the chamber 20a with the inert gas (Step S11). That is, the control portion 80 supplies the inert gas from the supply portion 75 into the chamber 20a so as to decrease an oxygen concentration in the chamber 20a.

Subsequently, the control portion 80 determines whether or not the oxygen concentration in the chamber 20a is less than the first threshold value (Step S12). That is, the determination portion 80a compares a value of the oxygen concentration measured by the oxygen sensor 81 with the first threshold value, and in a case where the determination portion 80a determines that the value of the oxygen concentration in the chamber 20a is equal to or more than the first threshold value (Step S12: NO), the control portion 80 continues to perform Step S12.

On the other hand, in a case where the determination portion 80a determines that the value of the oxygen concentration in the chamber 20a is less than the first threshold value (Step S12: YES), the control portion 80 drives the first blower 59 (Step S13) and opens the second switching valve 64 so that the inert gas is fed only to the second circulation path 54 (Step S14). Immediately after startup of the modeling device 1, the oxygen concentration and a water vapor concentration in the chamber 20a are high, and thus the control portion 80 passes the inert gas only through the second circulation path 54 and does not feed the inert gas to the absorber 70 so as to prevent an absorption amount of the absorber 70 from reaching an upper limit value. It is assumed that, upon and after ending of a previous modeling process cycle, the first circulation path 53 and the bypass passage 90 are maintained in a state of being filled with the inert gas. In a case where air has entered part of the first circulation path 53 or the bypass passage 90 as a result of performing maintenance, for example, there is a need to separately add a process of introducing the inert gas into an area where the air has entered, though a detail of this process is omitted in Fig. 4.

Subsequently, as shown in Fig. 4, the control portion 80 determines whether or not the oxygen concentration in the chamber 20a is less than the second threshold value (Step S15). That is, the determination portion 80a compares a value of the oxygen concentration measured by the oxygen sensor 81 with the second threshold value, and in a case where the determination portion 80a determines that the value of the oxygen concentration in the chamber 20a is equal to or more than the second threshold value (Step S15: NO), the control portion 80 continues to perform Step S15.

On the other hand, in a case where the determination portion 80a determines that the value of the oxygen concentration in the chamber 20a is less than the second threshold value (Step S15: YES), the control portion 80 opens the first switching valves 62, opens the first opening/closing valve 73 and the second opening/closing valve 74, operates the second blower 61 so that the inert gas is fed to the first circulation path 53 (Step S16). The bypass passage 90 is in a blocked state. As shown by the timing t2 in Figs. 3(A) to 3(E), the oxygen concentration is decreased by supplying the inert gas and becomes less than the threshold value. That is, when the oxygen concentration in the chamber 20a becomes lower than a controlled concentration (the second threshold value) determined based on an absorption capacity, the inert gas is passed through the first circulation path 53 in which the absorber 70 is provided so that the oxygen concentration and the water vapor concentration are further decreased. That is, as shown in Fig. 7, the control portion 80 opens the first switching valves 62, opens the first opening/closing valve 73 and the second opening/closing valve 74, closes the third switching valves 91, and drives the second blower 61 so that the inert gas passes through the first circulation path 53.

Subsequently, as shown in Fig. 4, the control portion 80 determines whether or not the oxygen concentration in the chamber 20a is less than the third threshold value (Step S17). That is, the determination portion 80a compares a value of the oxygen concentration measured by the oxygen sensor 81 with the third threshold value, and in a case where the determination portion 80a determines that the value of the oxygen concentration in the chamber 20a is equal to or more than the third threshold value (Step S17: NO), the control portion 80 continues the above process until the oxygen concentration in the chamber 20a becomes less than the third threshold value.

On the other hand, upon determining that the oxygen concentration in the chamber 20a is less than the third threshold value (Step S17: YES), the determination portion 80a determines that the condition for starting modeling of the three-dimensional object O is satisfied (Step S18). As shown by the timing t3 in Figs. 3(A) to 3(E), by the effect provided by the absorber 70, the oxygen concentration is further decreased to less than the third threshold value. That is, the oxygen concentration in the chamber 20a has become sufficiently low, and thus even when modeling of the three-dimensional object O is performed, contents of oxygen and water vapor can be suppressed to within set values. It is, therefore, permitted to start modeling of the three-dimensional object O, and this process flow is ended.

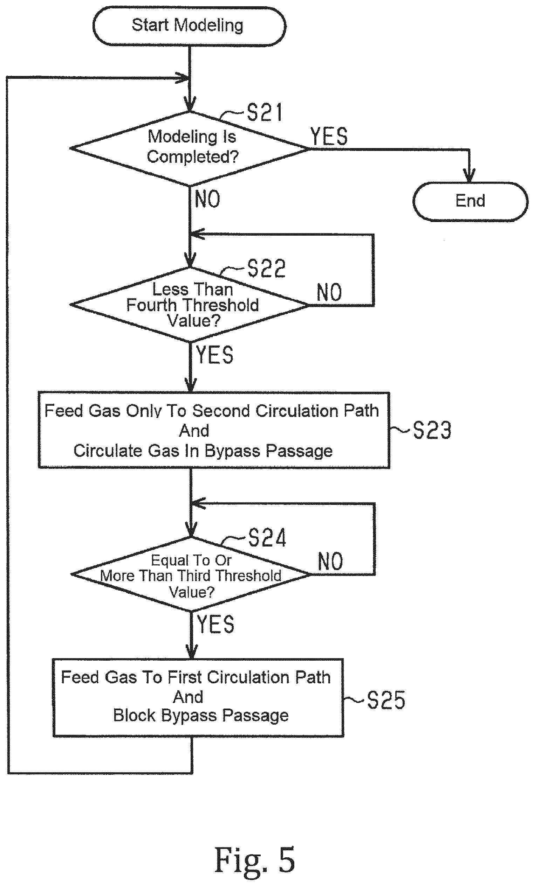

Next, as shown in Fig. 5, when the modeling device 1 starts modeling, the control portion 80 continues to supply and circulate the inert gas so as to remove fume or the like generated in the chamber 20a in the course of modeling the three-dimensional object O. That is, while causing the inert gas to be supplied from the supply portion 75 to the circulation path 50, the control portion 80 drives the first blower 59 to circulate the inert gas.

The modeling device 1 produces the three-dimensional object O by alternately and repeatedly performing a process of stacking the powder layer 25 made of the powdery material M and disposed in the chamber 20a and a process of applying a laser to the laser radiation surface 25A of the powder layer 25 so as to partially solidify the powder layer 25.

In applying a laser to the powder layer 25, by use of the inert gas having an oxygen concentration and a water vapor concentration reduced by the absorber 70, the fume removal flow F is formed along the laser radiation surface 25A.

When a laser is applied to the laser radiation surface 25A of the powder layer 25, fume is generated and a sputtered substance is scattered from a laser-irradiated area on the laser radiation surface 25A. The fume generated from the laser-irradiated area is immediately blown by the fume removal flow F and thus is sucked through the suction ports 41 without ascending to block a laser path. Furthermore, the sputtered substance scattered from the laser-radiated area is scattered into the fume removal flow F having a reduced oxygen concentration and a reduced water vapor concentration, and thus it is possible to suppress oxidation of the sputtered substance while being scattered and also to suppress falling of the sputtered substance oxidized. Moreover, the fume removal flow F is formed by use of the inert gas having an oxygen concentration and a water vapor concentration reduced by the absorber 70. This suppresses oxidation of the powdery material M of the powder layer 25 by the fume removal flow F. In this manner, the three-dimensional object O is modeled while the inert gas having a reduced oxygen concentration and a reduced water vapor concentration is fed into the chamber 20a, and thus it is possible to suppress oxidation of the powdery material M, namely, oxidation of the three-dimensional object O.

The control portion 80 determines whether or not modeling of the three-dimensional object O is completed (Step S21). That is, when modeling of the three-dimensional object O is completed (Step S21: YES), the control portion 80 ends the process flow. That is, the control portion 80 stops driving of the first blower 59 and the second blower 61. Furthermore, the control portion 80 closes the first switching valves 62 and closes the first opening/closing valve 73 and the second opening/closing valve 74 so as to hermetically seal the absorber 70, thus preventing entry of the inert gas into the absorber 70. Moreover, the control portion 80 closes the third switching valves 91 so as to also hermetically seal the bypass passage 90.

On the other hand, when modeling of the three-dimensional object O is yet to be completed (Step S21: NO), a transition is made to Step S22. That is, during modeling of the three-dimensional object O, the control portion 80 continues to supply and circulate the inert gas.

Subsequently, the control portion 80 determines whether or not the oxygen concentration in the chamber 20a is less than the fourth threshold value (Step S22). That is, the determination portion 80a compares a value of the oxygen concentration measured by the oxygen sensor 81 with the fourth threshold value, and in a case where the determination portion 80a determines that the value of the oxygen concentration in the chamber 20a is equal to or more than the fourth threshold value (Step S22: NO), the process of Step S22 is continued.

On the other hand, in a case where the determination portion 80a determines that the value of the oxygen concentration in the chamber 20a is less than the fourth threshold value (Step S23: YES), the control portion 80 causes the inert gas to be fed only to the second circulation path 54 and circulates the inert gas in the bypass passage 90 (Step S23). That is, as shown in Fig. 6, in order to prevent the oxygen concentration in the chamber 20a from being excessively decreased to less than the fourth threshold value, the control portion 80 passes the inert gas only through the second circulation path 54 in which the absorber 70 is not provided, thus stopping absorption of oxygen by the absorber 70. Furthermore, the control portion 80 circulates the inert gas in the bypass passage 90 and thus continues to operate the absorber 70 and the second blower 61.

Subsequently, the control portion 80 determines whether or not the oxygen concentration in the chamber 20a is equal to or more than the third threshold value (Step S24). That is, the determination portion 80a compares a value of the oxygen concentration measured by the oxygen sensor 81 with the third threshold value, and in a case where the determination portion 80a determines that the value of the oxygen concentration in the chamber 20a is less than the third threshold value (Step S24: NO), the process of Step S24 is continued.

On the other hand, in a case where the determination portion 80a determines that the value of the oxygen concentration in the chamber 20a is equal to or more than the third threshold value (Step S24: YES), the control portion 80 causes the inert gas to be fed to the first circulation path 53 and blocks the bypass passage 90 (Step S25). Then, a transition is made to Step S21. That is, as shown in Fig. 7, the control portion 80 opens the first switching valves 62, opens the first opening/closing valve 73 and the second opening/closing valve 74, closes the third switching valves 91, and drives the second blower 61 so that the inert gas passes through the first circulation path 53.

For example, in a modeling device without the above-described bypass passage 90, it is conceivable to decrease power of the second blower 61 so as to limit a volume of air to be fed to the absorber 70, thus decreasing an amount of an inert gas flowing into the absorber 70. However, in a case where the second blower 61 is a blower having a high discharge pressure, heat generation by a motor of the second blower 61 might become large. Furthermore, in the modeling device without the above-described bypass passage 90, it is conceivable to repeat startup and stopping of the second blower 61, thus decreasing an amount of the inert gas flowing into the absorber 70. However, frequently repeating the startup and stopping of the second blower 61 might lead to a failure of the second blower 61.

In the modeling device 1 including the bypass passage 90 according to this embodiment, without the need to limit a volume of air supplied by the second blower 61 and also the need to frequently repeat startup and stopping of the second blower 61, it is possible to suppress deterioration in absorption ability of the absorber 70.

As described above, according to this embodiment, the following effects can be obtained.
(1) The bypass passage 90 is provided in the first circulation path 53, and thus it is possible to reduce a flow rate of an inert gas passing through the absorber 70 so as to prevent an absorption ability of the absorber 70 from reaching a limit. The second circulation path 54 is further provided in combination therewith, and thus it is possible to further reduce a flow rate of the inert gas passing through the absorber 70. Consequently, it is possible to suppress deterioration in absorption ability of the absorber 70.
(2) When a state of the modeling device 1 is switched to the first state by the control portion 80, the inert gas is passed through the absorber 70 and supplied into the chamber 20a. On the other hand, when the state of the modeling device 1 is switched to the second state by the control portion 80, while the inert gas containing at least one of oxygen and water vapor and passing though the absorber 70 is limited so as to prevent the absorption ability of the absorber 70 from reaching a limit, a necessary amount of inert gas passes through the second circulation path 54 to be supplied into the chamber 20a. Furthermore, when the state of the modeling device 1 is switched to the second state by the control portion 80, the inert gas can be circulated between the absorber 70 and the bypass passage 90, and thus the absorber 70 can continue to operate without being stopped from operating. Further, whether the modeling device 1 is in the first state or the second state, the absorber 70 can continue to operate, and thus it is possible to suppress deterioration in absorption ability of the absorber 70, which is caused by delayed startup of the absorber 70.
(3) When an oxygen concentration is decreased to equal to or less than the fourth threshold value, which is a predetermined range, by the absorber 70, further absorption is no longer needed, and thus switching to the second state is performed, so that it is possible to suppress unnecessary absorption of oxygen by the absorber 70. Furthermore, it is possible to maintain constant quality of the three-dimensional object O produced.
(4) In a case where the modeling device 1 is brought into the second state, even when a flow rate of the inert gas passing through the first circulation path 53 becomes zero, by use of the inert gas passing through the second circulation path 54, a necessary amount of inert gas can be supplied into the chamber 20a.
(5) The inert gas passes through the fine powder removal filter 58 for removing fine powder particles and then passes through the absorber 70, and thus it is possible to suppress entry of the fine powder particles into the absorber 70.

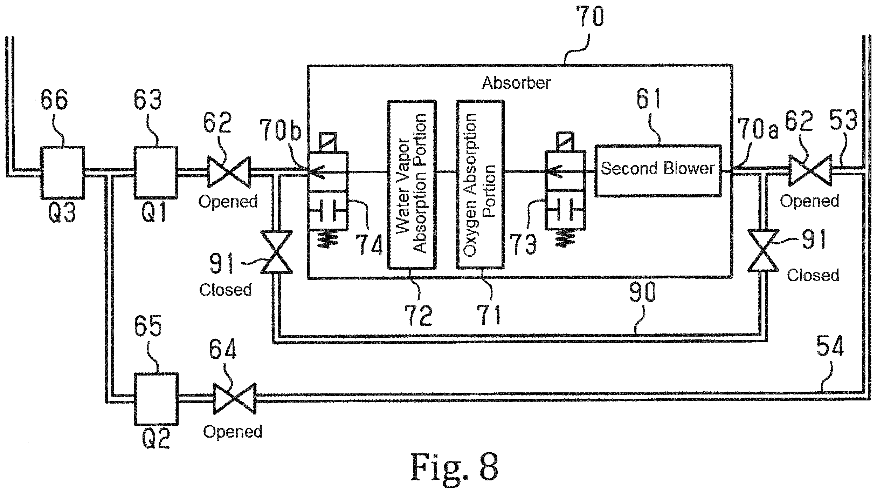

The foregoing embodiment can also be appropriately modified as described below.
- In the foregoing embodiment, in filling the chamber 20a with an inert gas prior to molding of the three-dimensional object O, the inert gas is fed only to the second circulation path 54 and is not fed to the bypass passage 90. It is possible, however, that concurrently with feeding the inert gas to the second circulation path 54, the first opening/closing valve 73 and the second opening/closing valve 74 are closed, and the first switching valves 62 and the third switching valves 91 are opened so that the inert gas is fed also to the bypass passage 90.
- As shown by a broken line or an alternate long and short dashed line in Fig. 3(C), and as shown in Fig. 8, when in the first state where the first switching valves 62 are opened so that the inert gas passes through the first circulation path 53, the control portion 80 may open the second switching valve 64 in addition to the first switching valves 62 so that the inert gas passes also through the second circulation path 54. That is, according to the broken line in Fig. 3(C), the second switching valve 64 is switched from a closed state to an opened state at the timing t1 and maintained in the opened state. Furthermore, according to the alternate long and short dashed line in Fig. 3(C), the second switching valve 64 is opened at the timing t1 and maintained in a state where a flow rate is suppressed as compared with that in a fully opened state. With this configuration, while an amount of the inert gas passing through the first circulation path 53 is limited by the control portion 80 so as to prevent the absorption ability of the absorber 70 from reaching a limit, by use of the inert gas passing through the second circulation path 54, a flow rate of the inert gas supplied into the chamber 20a can be secured. That is, even when the modeling device 1 is in the first state, it is possible to suppress a flow rate of the inert gas passing through the absorber 70.

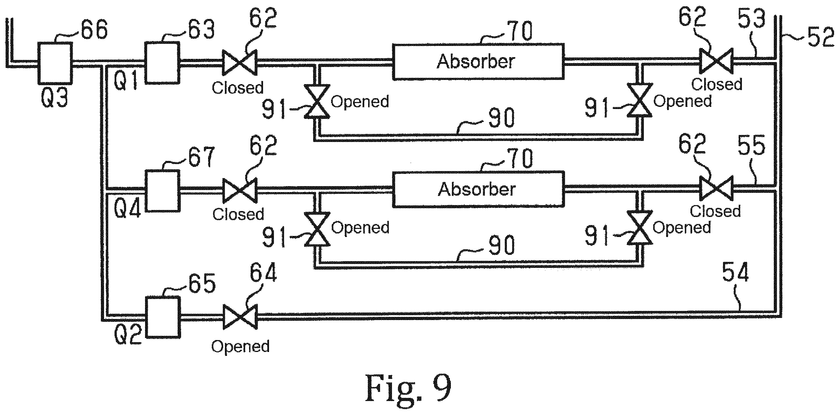

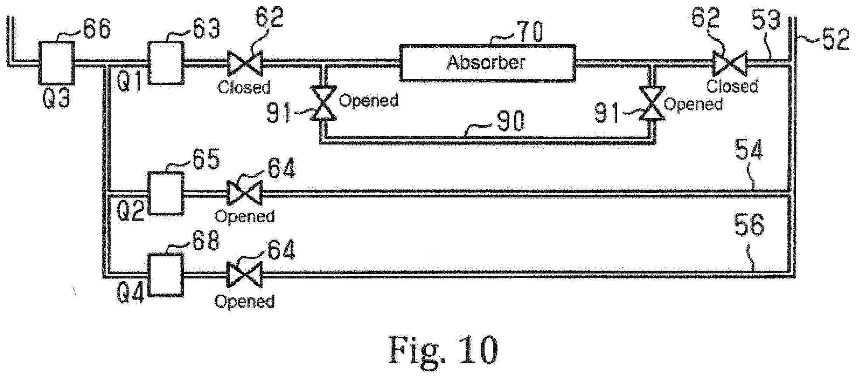

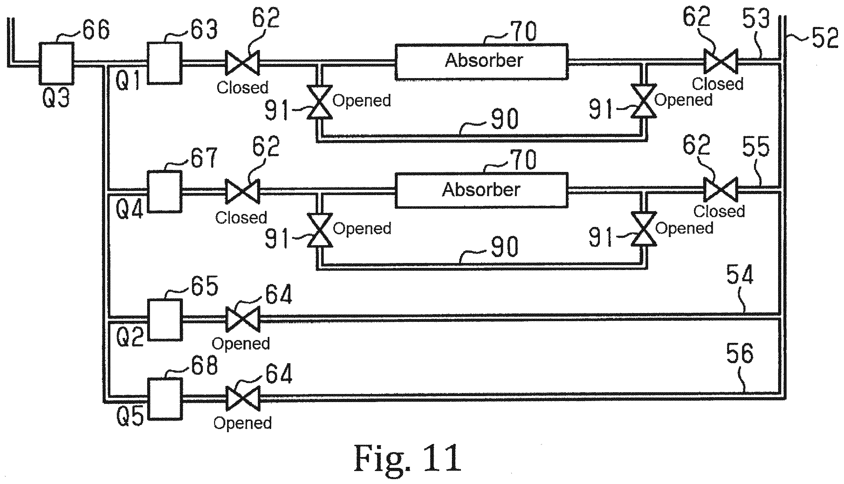

- In the foregoing embodiment, the control portion 80 functioning as the flow rate adjustment portion adjusts a flow rate of the inert gas passing through the first circulation path 53 and a flow rate of the inert gas passing through the second circulation path 54. However, a configuration of the flow rate adjustment portion may be omitted. For example, the control portion 80 may control only opening and closing of the first switching valves 62 and the second switching valve 64.
- In the foregoing embodiment, when the inert gas is passed through the first circulation path 53, the bypass passage 90 is blocked (Step S11, Step S21). It is possible, however, that while the third switching valves 91 are maintained in an opened state, the inert gas is fed to the bypass passage 90.
- Furthermore, a configuration of the third switching valves 91 may be omitted. In that case, merely by closing the first switching valves 62, the inert gas can be circulated in the absorber 70 and the bypass passage 90.
- While in the foregoing embodiment, after modeling of the three-dimensional object O is ended, the inlet 70a and the outlet 70b of the absorber 70 are closed, the inlet 70a and the outlet 70b of the absorber 70 are not necessarily required to be closed.
- Furthermore, configurations of the first opening/closing valve 73 and the second opening/closing valve 74 may be omitted.
- In the foregoing embodiment, when modeling of the three-dimensional object O is ended, a change is made so that the inert gas passes only through the second circulation path 54. It is also possible that the first circulation path 53 and the second circulation path 54 remain in their respective passage states at the time when modeling of the three-dimensional object O is ended.
- In the foregoing embodiment, based on an oxygen concentration in the chamber 20a, the determination portion 80a performs a determination, and based on a result of the determination, the control portion 80 switches between the first circulation path 53 and the second circulation path 54. It is possible, however, that based on a fact that an integrated value of a flow rate of the inert gas measured with the flowmeter has reached a predetermined amount, the determination portion 80a determines that the chamber 20a is filled with the inert gas. Furthermore, when a flow rate is constant, a capacity in the chamber 20a is divided by the flow rate of the inert gas, and thus a length of time required to fill the chamber 20a with the inert gas can be estimated. Accordingly, a path of the inert gas may be switched based on the length of time alone.
- In the foregoing embodiment, based on an oxygen concentration in the chamber 20a, the determination portion 80a performs a determination, and based on a result of the determination, the control portion 80 switches between the first circulation path 53 and the second circulation path 54. It is possible, however, that based on a fact that an integrated value of a flow rate of the inert gas measured with the flowmeter has reached a predetermined amount calculated beforehand based on a capacity in the chamber 20a, the determination portion 80a determines that the chamber 20a is filled with the inert gas. According to this configuration, without the need to use a plurality of costly oxygen sensors, it is possible to perform an appropriate determination based on a flow rate of the inert gas. Furthermore, when a flow rate is constant, the predetermined amount calculated beforehand based on a capacity in the chamber 20a is divided by the flow rate of the inert gas, and thus a length of time required to fill the chamber 20a with the inert gas can be estimated. Based on a fact that, as found out using a timer built in the control portion 80, the length of time has elapsed since the start of feeding the inert gas, the determination portion 80a may determine that the chamber 20a is filled with the inert gas. According to this configuration, a determination can be performed without the need to use a special sensor for determination.
- In the foregoing embodiment, the absorber 70 may absorb water vapor contained in the inert gas, thus removing the water vapor from the inert gas.
- In the foregoing embodiment, although a maximum flow rate of the inert gas in the second circulation path 54 should be discharged into the chamber 20a, a flow rate of the inert gas may be set to be lower than the maximum flow rate.
- While in the foregoing embodiment, the absorber 70 is a device for absorbing both of oxygen and water vapor, the absorber 70 may be a device for absorbing either one of oxygen and water vapor.
- While in the foregoing embodiment, two circulation paths, namely, the first circulation path 53 and the second circulation path 54 are provided in the second path 52 of the circulation path 50, a plurality of first circulation paths and a plurality of second circulation paths may be provided in the second path 52 of the circulation path 50. For example, as shown in Fig. 9, a first circulation path 53 and a third circulation path 55 corresponding to the first circulation path and a second circulation path 54 corresponding to the second circulation path may be provided. A fourth flowmeter 67 is provided in the third circulation path 55. Furthermore, as shown in Fig. 10, a first circulation path 53 corresponding to the first circulation path and a second circulation path 54 and a fourth circulation path 56 corresponding to the second circulation path may be provided. A fifth flowmeter 68 is provided in the fourth circulation path 56. Furthermore, as shown in Fig. 11, a first circulation path 53 and a third circulation path 55 corresponding to the first circulation path and a second circulation path 54 and a fourth circulation path 56 corresponding to the second circulation path may be provided.

## Claims

1. A modeling device (1) for producing a three-dimensional object (O) by a repeated process of applying a laser to a powder layer (25) so as to partially solidify the powder layer (25), the powder layer (25) being made of a powdery material (M) and disposed in a chamber (20a), the modeling device (1) comprising:
a discharge port (31) for discharging into the chamber (20a) a gas for removing fume;
a suction port (41) for sucking the gas from the chamber (20a);
an absorber (70) for absorbing at least one of oxygen and water vapor contained in the gas;
a first circulation path (53) and a second circulation path (54) each communicating between the discharge port (31) and the suction port (41) so that the gas is circulated from the suction port (41) to the discharge port (31), the absorber (70) being provided on the first circulation path (53) and not provided on the second circulation path (54); and
a bypass passage (90) connecting between an upstream side and a downstream side of the absorber (70) in the first circulation path (53), wherein
the modeling device (1) further comprises a switching portion (80, 62, 91) for
switching between a first state and a second state, the first state being a state where the first circulation path (53) communicates with the absorber (70), so that the gas circulates from the suction port (41) through the absorber (70) to the discharge port (31), the second state being a state where communication between the first circulation path (53) and the second circulation path (54) is blocked, so that the gas circulates from the suction port (41) through only the second circulation path (54) to the discharge port (31), and the gas also circulates between the absorber (70) and the bypass passage (90).

2. The modeling device (1) according to claim 1, wherein the switching portion (80, 62, 91) switches to the second state so that at least one of an oxygen concentration and a water vapor concentration of the gas is in a predetermined range appropriate for modeling of the three-dimensional object (O).

3. The modeling device (1) according to any one of claims 1 to 2, further comprising a flow rate adjustment portion (80, 62, 64) for adjusting a flow rate of the gas passing through the first circulation path (53) and a flow rate of the gas passing through the second circulation path (54).

4. The modeling device (1) according to any one of claims 1 to 3, further comprising a filter (58) for removing fine powder particles from the gas passing therethrough, the filter (58) being provided upstream of the absorber (70) in the first circulation path (53).

## Patentansprüche

1. Modelliervorrichtung (1) zum Herstellen eines dreidimensionalen Objekts (O) mittels eines wiederholten Prozesses, bei dem ein Laser auf eine Pulverschicht (25) aufgebracht wird, um die Pulverschicht (25) teilweise zu verfestigen, wobei die Pulverschicht (25) aus einem pulverförmigen Material (M) hergestellt und in einer Kammer (20a) angeordnet ist und die Modelliervorrichtung (1) umfasst:
eine Ausstoßöffnung (31) zum Ausstoßen eines Gases zum Entfernen von Rauch in die Kammer (20a);
eine Absaugöffnung (41) zum Absaugen des Gases aus der Kammer (20a);
einen Absorber (70) zum Absorbieren von Sauerstoff oder/und Wasserdampf, die in dem Gas enthalten sind;
einen ersten Zirkulationsweg (53) und einen zweiten Zirkulationsweg (54), die jeweils Verbindung zwischen der Ausstoßöffnung (31) und der Absaugöffnung (41) herstellen, so dass das Gas von der Absaugöffnung (41) zu der Ausstoßöffnung (31) zirkuliert wird, wobei der Absorber (70) auf dem ersten Zirkulationsweg (53) vorhanden ist und auf dem zweiten Zirkulationsweg (54) nicht vorhanden ist; sowie
einen Umgehungskanal (90), der Verbindung zwischen einer stromauf liegenden Seite und
einer stromab liegenden Seite des Absorbers (70) auf dem ersten Zirkulationsweg (53) herstellt, wobei
die Modelliervorrichtung (1) des Weiteren einen Schaltabschnitt (80, 62, 91) zum Umschalten zwischen einem ersten Zustand und einem zweiten Zustand umfasst, wobei der erste Zustand ein Zustand ist, in dem der erste Zirkulationsweg (53) mit dem Absorber (70) in Verbindung steht, so dass das Gas von der Absaugöffnung (41) über den Absorber (70) zu der Ausstoßöffnung (31) zirkuliert, und der zweite Zustand ein Zustand ist, in dem Verbindung zwischen dem ersten Zirkulationsweg (53) und dem zweiten Zirkulationsweg (54) blockiert ist, so dass das Gas von der Absaugöffnung (41) nur über den zweiten Zirkulationsweg (54) zu der Ausstoßöffnung (31) zirkuliert, und das Gas auch zwischen dem Absorber (70) und dem Umgehungskanal (90) zirkuliert.

2. Modelliervorrichtung (1) nach Anspruch 1, wobei der Schaltabschnitt (80, 62, 91) in den zweiten Zustand schaltet, so dass eine Sauerstoffkonzentration oder/und eine Wasserdampfkonzentration des Gases in einem vorgegebenen Bereich liegt/liegen, der zum Modellieren des dreidimensionalen Objekts (O) geeignet ist.

3. Modelliervorrichtung (1) nach einem der Ansprüche 1 bis 2, die des Weiteren einen Strömungsgeschwindigkeits-Regulierungsabschnitt (80, 62, 64) zum Regulieren einer Strömungsgeschwindigkeit des über den ersten Zirkulationsweg (53) strömenden Gases und einer Strömungsgeschwindigkeit des über den zweiten Zirkulationsweg (54) strömenden Gases umfasst.

4. Modelliervorrichtung (1) nach einem der Ansprüche 1 bis 3, die des Weiteren einen Filter (58) zum Entfemen feiner Pulverteilchen aus dem durch ihn strömenden Gas umfasst, wobei der Filter (58) stromauf von dem Absorber (70) auf dem ersten Zirkulationsweg (53) vorhanden ist.

## Revendications

1. Dispositif de modélisation (1) pour produire un objet tridimensionnel (O) par un processus répété consistant à appliquer un laser sur une couche de poudre (25) de manière à solidifier partiellement la couche de poudre (25), la couche de poudre (25) étant constituée d'un matériau poudreux (M) et disposée dans une chambre (20a), le dispositif de modélisation (1) comprenant :
un orifice de décharge (31) pour décharger dans la chambre (20a) un gaz pour éliminer de la fumée ;
un orifice d'aspiration (41) pour aspirer le gaz depuis la chambre (20a) ;
un absorbeur (70) pour absorber au moins l'un parmi de l'oxygène et de la vapeur d'eau contenus dans le gaz ;
un premier chemin de circulation (53) et un second chemin de circulation (54) communiquant chacun entre l'orifice de décharge (31) et l'orifice d'aspiration (41) de sorte que le gaz est mis à circuler depuis l'orifice d'aspiration (41) vers l'orifice de décharge (31), l'absorbeur (70) étant agencé sur le premier chemin de circulation (53) et non agencé sur le second chemin de circulation (54) ; et
un passage de dérivation (90) reliant un côté amont et un côté aval de l'absorbeur (70) dans le premier chemin de circulation (53), dans lequel
le dispositif de modélisation (1) I comprend en outre une partie de commutation (80, 62, 91) pour une commutation entre un premier état et un second état, le premier état étant un état dans lequel le premier chemin de circulation (53) communique avec l'absorbeur (70), de sorte que le gaz circule depuis l'orifice d'aspiration (41) à travers l'absorbeur (70) vers l'orifice de décharge (31), le second état étant un état dans lequel une communication entre le premier chemin de circulation (53) et le second chemin de circulation (54) est bloquée, de sorte que le gaz circule depuis l'orifice d'aspiration (41) à travers uniquement le second chemin de circulation (54) vers l'orifice de décharge (31), et le gaz circule également entre l'absorbeur (70) et le passage de dérivation (90).

2. Dispositif de modélisation (1) selon la revendication 1, dans lequel la partie de commutation (80, 62, 91) commute en le second état de sorte qu'au moins l'une d'une concentration en oxygène et d'une concentration en vapeur d'eau du gaz se trouve dans une plage prédéterminée appropriée pour une modélisation de l'objet tridimensionnel (O).

3. Dispositif de modélisation (1) selon l'une quelconque des revendications 1 à 2, comprenant en outre une partie d'ajustement de débit (80, 62, 64) pour ajuster un débit du gaz passant à travers le premier chemin de circulation (53) et un débit du gaz passant à travers le second chemin de circulation (54).

4. Dispositif de modélisation (1) selon l'une quelconque des revendications 1 à 3, comprenant en outre un filtre (58) pour retirer des fines particules de poudre du gaz passant à travers celui-ci, le filtre (58) étant agencé en amont de l'absorbeur (70) dans le premier chemin de circulation (53).
